# EUROPÄISCHE PATENTSCHRIFT

(11) **EP 1 449 309 B1**
(45) Veröffentlichungstag und Bekanntmachung des Hinweises auf die Patenterteilung: **21.03.2007**
(21) Anmeldenummer: 02804146.5
(22) Anmeldetag: 19.11.2002
(51) Int. Cl.: H04B 1/59, G01S 13/76

(54) **Aktivierungseinrichtung für ein fernauslösbares Schaltungssystem**
Activation device for a remotely triggerable switching system
Dispositif d'activation un système de commutation déclenchable à distance

(30) Priorität: 29.11.2001 DE 10158615
(43) Veröffentlichungstag der Anmeldung: 25.08.2004
(73) Patentinhaber: SIEMENS AKTIENGESELLSCHAFT, 80333 München (DE)
(72) Erfinder: VOSSIEK, Martin, 31139 Hildesheim (DE); SCHMIDT, Frank, 85604 Zorneding (DE)
(86) Internationale Anmeldenummer: PCT/DE2002/004262
(87) Internationale Veröffentlichungsnummer: WO 2003/049305

(56) Entgegenhaltungen:
- EP-A- 0 467 036
- WO-A-00/43802

## Beschreibung

Die Erfindung betrifft eine Aktivierungseinrichtung, ein dies umfassendes fernauslösbares Schaltungssystem sowie jeweilige Betriebsverfahren.

Elektrische Schaltungen, nicht an das Stromnetz angebunden sind, z.B. Funk-Identmarken oder funkende Zutrittskarten, Tickets u.ä. ("Smartcards") sind auf einen extrem niedrigen Energieverbrauch angewiesen. zu erreichen. Ein ständiger Betrieb würde die Batterien sehr schnell erschöpfen.

Die Schaltungen werden deshalb herkömmlicherweise in einem sehr stromsparenden, inaktiven Zustand gehalten und nur bei Bedarf kurzzeitig aktiviert. Die Aktivierung erfolgt bisher durch ein Funksignal, welches im batteriebetriebenen Gerät empfangen, gleichgerichtet und zur Aktivierung genutzt wird. Die Aktivierung wird üblicherweise dann ausgelöst, wenn das gleichgerichtete Signal einen bestimmten Schwellenwert überschreitet.

Ein Problem bei diesem herkömmlichen Verfahren ist die oft unzureichende Reichweite der Aktivierungssignale, welche insbesondere im geringen Wirkungsgrad von Gleichrichterdioden bei kleinen Spannungen begründet ist. Ein weiteres Problem ist, dass die Aktivierungseinrichtung auf alle Signale in einem bestimmten Frequenzbereich, also auch Störsignale, anspricht, da vor der Aktivierung noch keine "Intelligenz" aufgeweckt wurde - dies führt zur ungewollten Aktivierung der Schaltung und damit zur vorzeitigen Erschöpfung der Batterien.

Aus WO 00/43802 ist eine Vorrichtung bekannt, bei der eine Strahlung am Ort eines Kodierungselementes mit Hilfe eines Wandlers in eine Sekundärenergieform umgewandelt wird, die zwischengespeichert wird. Die gespeicherte Sekundärenergie wird dann einem nichtlinearen Element zugeleitet, welches eine Funkenstrecke ist.

Aus EP 0 467 036 A2 ist ein ID-Tag bekannt, welcher mittels einer Aktivierungsschaltung ("wake-up circuit") unter.ständiger, niedriger Leistung gehalten wird. Die Aktivierungsschaltung wird von einem Empfangssignal aktiviert, welches erst von einem Mikroprozessor ausgewertet wird.

Es ist die Aufgabe der vorliegenden Erfindung, eine Möglichkeit zur signalsensitiven und störsignalunanfälligen Aktivie rung elektrischer, insbesondere elektronischer, Schaltungen bereitzustellen.

Diese Aufgabe wird durch eine Aktivierungseinrichtung nach Anspruch 1, ein fernauslösbares Schaltungssystem nach Anspruch 8 und jeweils ein Verfahren zu deren Betrieb nach den Ansprüchen 11 bzw. 12 gelöst.

Die Aktivierungseinrichtung weist mindestens eine Empfangsvorrichtung zum Empfang eines Aktivierungssignals sowie mindestens eine Aktivierungsschaltung zur Aktivierung einer elektrischen Schaltung auf. Die Empfangsvorrichtung ist zum Beispiel eine Funkantenne.

Die Aktivierungseinrichtung umfasst zudem mindestens ein mit der Empfangsvorrichtung und der Aktivierungseinrichtung verbundenes pyroelektrisches Element. Das pyroelektrische Element ist mittels des Aktivierungssignals erwärmbar, so dass in diesem eine zur Betätigung der Aktivierungsschaltung ausreichende Spannung erzeugbar ist.

Bei dieser Aktivierungseinrichtung wird auf die ineffiziente direkte Gleichrichtung der empfangenen hochfrequenten Aktivierungssignale verzichtet. Vielmehr wird das - bevorzugt hochfrequente - Aktivierungssignal zunächst in Wärme umgewandelt. Die Wärmeumwandlung geschieht günstigerweise mittels eines speziellen Heizelementes, insbesondere mittels eines direkt an die Empfangsvorrichtung angeschlossen ohmschen Widerstandes. Dessen Erwärmung übertragt sich auf das pyroelektrischen Element und hat in diesem eine Ladungstrennung im zur Folge. Die aus der Ladungstrennung resultierende Spannung betreibt eine Aktivierungsschaltung, die wiederum ein Wecksignal für eine nachgeschaltete Elektrik, insbesondere für eine Elektronikschaltung, bereitstellen kann. Die Aktivierungsschaltung ist bevorzugt in ULP ("Ultra Low Power")-Technik ausgeführt, so dass sie bereits mit extrem kleinen elektrischen Leistungen arbeitet und die Batterie nicht wesentlich belastet.

Bei der Aktivierungseinrichtung sind ferner mehrere, jeweils mindestens einen Heizwiderstand und mindestens ein pyroelektrisches Element umfassende Signalumsetzer unterschiedlicher Kodierung vorhanden. Dadurch können verschiedene Aktivierungssignale verschiedene Teile der Elektrik bzw. der Elektronik aktivieren und dadurch eine variable Reaktion, z. B. eine jeweils unterschiedliche Datenabfrage, hervorrufen. Eine derartige Kodierung ist insbesondere aber auch dann sinnvoll, wenn unterschiedliche elektrische bzw. elektronische Schaltungssysteme getrennt und gezielt aktivierbar sein sollen.

Das pyroelektrische Element umfasst bevorzugt einen Einkristall, einen keramischen Grundstoff und/oder ein Polymer. Als pyroelektrisches Material sind z.B. ferroelektrische Kristalle der Gruppe Triglyzinsulfate (TGS) oder Lithiumtantalat (LiTaO3), Yttrium Barium Kupfer Oxid (YBCO), Blei-Zirkon-Titanat (PZT) oder Polymere wie Polyvinylidendifluorid (PVDF) sowie elektrokeramische bzw. ferroelektrische Dünnschichten, z.B. aus den oben genannten Materialien, geeignet. Diese Materialien bzw. Materialzusammenstellungen werden üblicherweise bei pyroelektrischen Infrarot-Detektoren (Pyro-Detektoren), Bolometern oder Pyro-Thermometern eingesetzt. Die bei diesen Sensoren üblichen Aufbautechniken und Materialien sind daher in weiten Teilen auf günstige Ausführungsformen der vorliegenden Aktivierungseinrichtung übertragbar.

Die Aufgabe wird ebenfalls durch ein fernauslösbares Schaltungssystem gelöst. Dies umfasst mindestens eine Aktivierungseinrichtung und eine dieser nachgeschaltete elektrische Schaltung. Die elektrische Schaltung ist mittels mindestens eines Energiespeichers, z. B. einer Batterie, eines Akkumulators oder eines Kondensators, betreibbar.

Es ist insbesondere vorteilhaft, wenn das fernauslösbare Schaltungssystem mindestens einen Transmitter mit nachgeschalteter Sendevorrichtung umfasst. Dadurch kann es gespeicherte Daten zurücksenden, z. B. zur berührungslosen Durchgangskontrolle, z. B. bei einem Konzert oder in öffentlichen Verkehrsmitteln. Die Aktivierungseinrichtung und der Transmitter können an eine gemeinsame Sende-/Empfangsantenne oder an getrennte Antennen angeschlossen sein. Zur reduzierten Beeinflussung ist es vorteilhaft, wenn die Empfangsvorrichtung und die Sendevorrichtung zueinander abweichende Frequenzen nutzen. Insbesondere eine Ferritantenne ist für die Nutzung günstiger hochfrequenter Feldenergie geeignet.

Es ist für die Aktivierungseinheit und für das fernauslösbare Schaltungssystem günstig, wenn diese in Dünnschichttechnologie ausgeführt sind.

Die Aufgabe wird auch durch ein Verfahren zum Betrieb der mindestens einen Aktivierungseinrichtung gelöst, bei dem an die Aktivierungseinheit ein zeitlich moduliertes Aktivierungssignal gesendet wird, und dann dort aufgrund der zeitlichen Modulation eine thermoelektrische Korrelation im Signalumsetzer durchgeführt wird. Dadurch können unterschiedliche Aktionen der Aktivierungseinrichtung(en) gezielt ausgelöst werden. Mit Korrelation wird hier eine allgemeine Methode bezeichnet, einen Vergleich des an die Aktivierungseinheit gesendeten Signalmusters mit einem in der Aktivierungseinheit abgelegten Muster durchzuführen, wobei dieser Vergleich vorzugsweise direkt auf der thermoelektrischen Ebene erfolgt. Die Korrelation umfasst beispielsweise nicht nur eine Korrelation im mathematisch strengen Sinn, sondern auch Faltungs- oder Filterungsvorgänge, die dazu geeignet sind, Signale zu analysieren und zu vergleichen.

Die Korrelation kann auch zur Verbesserung des Signal-zu-Rausch-Verhältnisses des detektierten Signal eingesetzt werden. Durch den Korrelationsgewinn, z.B. durch eine Pulskompression, lässt sich z.B. die Entfernung, aus der die Aktivierungseinheit aktiviert werden kann, deutlich vergrößern. Aktivierungssignale mit guten Korrelationseigenschaften sind z.B. die aus der Telekommunikation bekannten Spread-Spektrum-Signale, digitale 'Pseudo-Zufalls-Kodes' (z.B. Barker-Kodes, M-Sequenzen, Gold- oder Golay-Sequenzen) oder auch frequenzmodulierte Signale, hierbei insbesondere linear frequenzmodulierte Signal (Chirps) usw..

Die Aufgabe wird auch durch ein Verfahren zum Betrieb des fernauslösbaren Schaltungssystems gelöst, bei dem an dieses ein zeitlich moduliertes Aktivierungssignal gesendet wird, aufgrund der zeitlichen Modulation in der Aktivierungseinheit eine thermoelektrische Korrelation durchgeführt wird und eine von der thermoelektrischen Korrelation abhängige selektive Aktivierung der elektrischen Schaltung durchgeführt wird. Die selektive Aktivierung kann als Aktivierung unterschiedlicher Teile der elektrischen Schaltung oder als Aktivierung unterschiedlicher elektrischer Schaltungen aufgefasst werden.

Die Aufgabe wird auch durch einen Signalumsetzer gelöst, der mindestens einen Heizwiderstand und mindestens ein pyroelektrisches Element umfasst, wobei das pyroelektrische Element durch eine elektromagnetisch-thermische Umsetzung des Aktivierungssignals im Heizwiderstand (Umwandlung des Aktivierungssignals in Wärme) so erwärmbar ist, dass in diesem eine, z. B. zur Betätigung der Aktivierungsschaltung ausreichende, Spannung erzeugbar ist. Dabei sind der mindestens eine Heizwiderstand und das mindestens eine pyroelektrischen Element so angeordnet, dass das Aktivierungssignals derart filterbar ist, dass ein Ausgangssummensignal des mindestens einen pyroelektrischen Elementes ein gefiltertes Abbild des Aktivierungssignals darstellt. Es ist vorteilhaft, wenn die Aktivierungseinheit einen solchen Signalumsetzer aufweist, insbesondere, wenn der Signalumsetzer einen Signalmustervergleich im Sinne eine Korrelation durchführt.

In den folgenden Ausführungsbeispielen wird die Aktivierungseinrichtung schematisch näher dargestellt.
- Figur 1: zeigt ein fernauslösbares Schaltungssystem,
- Figur 2: zeigt in Schrägansicht einen Signalumsetzer,
- Figur 3: zeigt eine Funk-Aktivierung elektronischer Komponenten nach dem Stand der Technik.

Figur 3 zeigt eine Prinzipskizze einer Aktivierung nach dem Stand der Technik.

Ein Aktivierungssender ST1 sendet ein Aktivierungssignal SIGA an eine herkömmliche Aktivierungseinrichtung ST2. Die Aktivierungseinrichtung ST2 umfasst eine direkt arbeitende Gleichrichterschaltung, die das Aktivierungssignal SIGA gleichrichtet und direkt zu ihrem Betrieb nutzt.

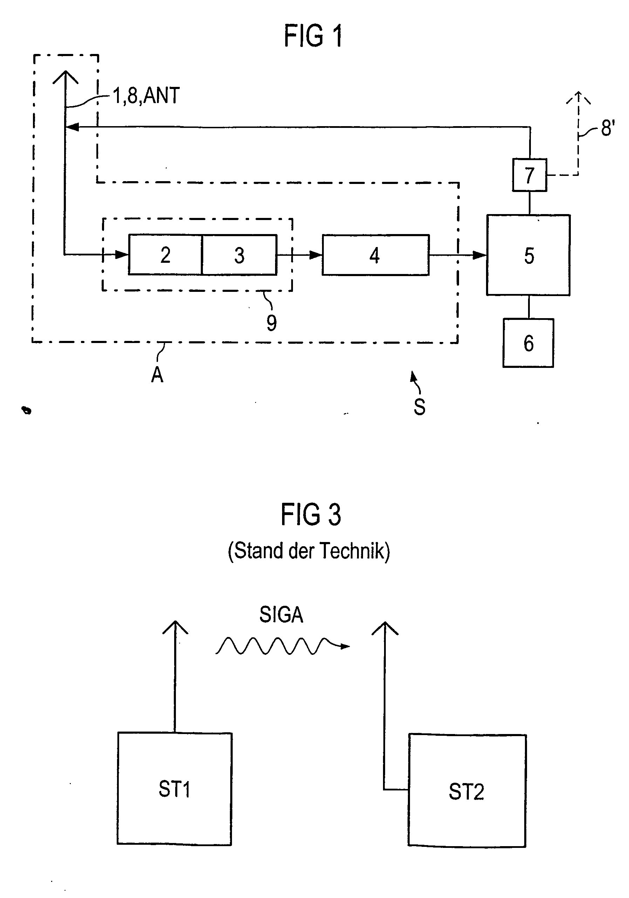

Figur 1 zeigt eine Prinzipskizze eines fernauslösbaren Schaltungssystems S.

In diesem Ausführungsbeispiel kann ein Aktivierungssignal SIGA über eine Empfangsvorrichtung 1 in Form einer Sende-/Empfangsantenne ANT empfangen werden. Direkt an den Empfangszweig der Antenne ANT ist ein Heizelement 2 in Form eines ohmschen Heizwiderstandes angeschlossen. Das Heizelement 2 ist so angebracht, dass durch dessen Erwärmung auch ein pyroelektrisches Element 3 erwärmt wird. Die Erwärmung des pyroelektrischen Elementes 3 sorgt in diesem für eine Ladungstrennung und damit für ein Spannungssignal. Dieses Spannungssignal dient dem Betrieb einer Aktivierungsschaltung 4. Die Aktivierungsschaltung 4 fährt eine elektronische Schaltung 5 hoch, die mittels eines Energiespeichers 6 in Form einer Batterie betreibbar ist. Als Teil der elektronischen Schaltung 6 oder als separates Bauelement ist ein Transmitter (allg.: ein Sender) 7 vorhanden, dessen Ausgangssignal über die Sende-/Empfangsantenne ANT als Sendevorrichtung 8 abgestrahlt wird. Alternativ kann auch eine separate Sendevorrichtung 8, günstigerweise in Form einer Sendeantenne 8' (gestrichelt gezeichnet), verwendet werden.

Die Aktivierungseinheit A umfasst die Elemente von der Empfangsvorrichtung bis einschließlich zur Aktivierungseinrichtung 4. Die zwischen Empfangsvorrichtung 1 und Aktivierungseinheit 4 angebrachten Elemente zur Umsetzung des Aktivierungssignals A in eine das Aktivierungselement 4 antreibende Spannung können auch als Teile eines Signalumsetzers 9 angesehen werden; dieser umfasst hier somit das Heizelement 2 und das pyroelektrische Element 3.

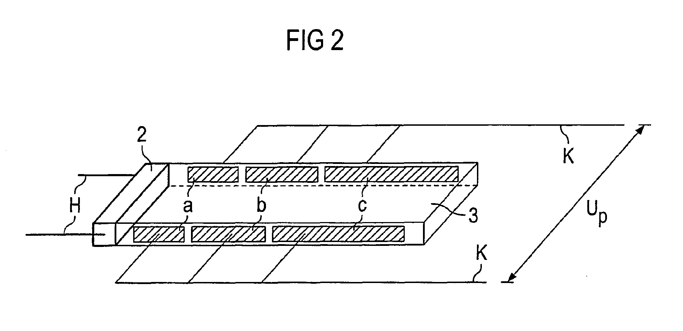

Figur 2 zeigt in Schrägansicht einen korrelierenden Signalumsetzer 9.

Oft ist es erwünscht, mit einem Aktivierungssignal SIGA nur ganz bestimmte Teile der Elektronikschaltung 5 oder nur eine oder mehrere ganz bestimmte Elektronikschaltung aus einer Gruppe von Elektronikschaltungen zu aktivieren. Hier taucht das schon genannte Problem auf, dass eine Adressierung vorgenommen werden muss, noch bevor die zu aktivierenden Schaltungen arbeiten. Dies wird durch den Signalumsetzer 9 nach diesem Ausführungsbeispiel geleistet.

Der Signalumsetzer 9 weist einen ohmschen Widerstand 2 auf, der über Zuführungsdrähte H mit der Empfangsvorrichtung 1 verbunden ist. Ein Aktivierungssignal SIGA, günstigerweise ein Funksignal, heizt den Widerstand 2 auf. Daraufhin breitet sich ein Wärmestrom im pyroelektrischen Element 3 aus, welcher thermisch eine gute Kopplung zum Widerstand 2 besitzt. Treffen mehrere Funksignale SIGA kurzzeitig nacheinander ein, führt dies zu einer Überlagerung mehrerer Wärmeausbreitungsvorgänge im pyroelektrischen Element 3.

Dieser Signalumsetzer 9 besitzt weiterhin mehrere verschieden lange Elektrodenpaare a, b, c, die über Summationsklemmen K miteinander verbunden sind. An jedem der Elektrodenpaare a, b, c stellt sich aufgrund der Erwärmung eine elektrische Spannung Up ein, die proportional der zeitlichen Änderung der Temperatur T zwischen den Elektrodenpaaren a, b, c ist. Durch eine gezielte Konstruktion und eine darauf abgestimmte thermische Anregung mit einem zeitlich modulierten Aktivierungssignal SIGA kann erreicht werden, dass bei Vorhandensein mehrerer Signalumsetzer 9 nur bestimmte Signalumsetzer 9 eine Aktivierungsspannung an die Summationsklemmen K abgeben. Mit anderen Worten: im Signalumsetzer 9 wird eine thermoelektrische Korrelation durchgeführt. Bei erfolgreicher Korrelation (Aktivierungssignal SIGA und Signalumsetzer 9 passen zusammen) summieren sich die Anteile und aktivieren die Aktivierungsschaltung 4.

Eine Kodierung der Signalumsetzer 9 wird dabei durch die Geometrie, Anzahl, Verschaltung und Anordnung der Elektroden auf dem pyroelektrischen Material festgelegt. Dazu können, wie z.B. auch bei digitalen Filtern üblich, mehrere unterschiedlich verzögerte Signalanteile mit ggf. unterschiedlicher Amplitudenwichtung kombiniert werden. Der Aufbau derartiger Filter- / Korrelationsstrukturen ist im Prinzip beispielsweise für Oberflächenwellen (OFW)-Filter bekannt, siehe z.B. "H. Matthews Surface wave filters. Design, construction, and use, Wiley, 1977". Die elektroakustische Kopplung und die akustische Wellenausbreitung der Oberflächenwellen -Bauelemente ist zur Anwendung in dieser Aktivierungseinrichtung allerdings durch eine thermoelektrische Kopplung und die entsprechenden thermischen Ausbreitungsvorgänge zu ersetzen. Ein weiterer entscheidender Unterschied zu Oberflächenwellen-Bauelementen besteht in der um Größenordnungen (ca. Faktor 1000) geringeren Ausbreitungsgeschwindigkeit von thermischen Wellen gegenüber akustischen Wellen. Die Baugrößen bzw. die implementierbaren Filter-Frequenzbereiche skalieren sich daher entsprechend, was für viele Anwendungen ein entscheidender Vorteil ist.

Der Signalumsetzer kann auch mehrere Heizelemente, also z.B. mehrere ohmschen Widerstände und nur ein Elektrodenpaar oder auch mehrere Elektrodenpaare aufweisen. Zur Lenkung des Wärmestroms ist es günstig, auf dem Bauelement Strukturen, z.B. Spuren mit besonders guter oder schlechter Leitfähigkeit, vorzusehen, die eine gezielte Ausbreitung des Wärmestroms von zumindest einem Heizelement zu zumindest einem pyroelektrischen Element mit zumindest einem Elektrodenpaar gewährleisten. Generell sind alle Größen, die auf die Signalwandlung und Ausbreitung Einfluss nehmen, zur Kodierung verwendbar, also z.B. Variationen von geometrischen Abmessungen, Ausbreitungsweglängen, Kopplungsfaktoren, Massen, Wärmeleitfähigkeiten, Elektrodenpaargröße etc..

Die Korrelation ist nicht nur zum Zwecke einer Adressierung vorteilhaft einsetzbar, sondern auch zur Verbesserung des Signal-zu-Rauschverhältnisses des detektierten Signal. Durch den Korrelationsgewinn, der z.B. durch eine Pulskompression, erreichbar ist, lässt sich z.B. die Entfernung, aus der die Aktivierungseinheit A in der Empfangsvorrichtung von einer Sendestation aktiviert werden kann, deutlich vergrößern. Das Prinzip der Pulskompression und Theorie und Verfahren zur Erzeugung eines guten Körrelationsgewinn sind z.B. in "H. Matthews Surface wave filters. Design, construction, and use, Wiley, 1977" beschrieben. Dabei wird häufig eine Unterscheidung in sogenannte Wiener-Filter-, Optimalfilter- (matched filter) Verfahren oder inverser Filterung, Rückfaltung (Deconvolution) getroffen.

Aktivierungssignale mit guten Korrelationseigenschaften sind z.B. die in der Kommunikation üblichen Spread-Spektrum-Signale, die bekannten digitalen 'Pseudo-Zufalls-Kodes' also z.B. Barker-Kodes, M-Sequenzen, Gold- oder Golay-Sequenzen oder auch frequenzmodulierte Signale, hierbei insbesondere linear frequenzmodulierte Signale (Chirps) usw..

Durch den Einsatz jeweils verschieden codierter Signalumsetzer 9 in den fernauslösbaren Schaltungssystemen ist es möglich, mit einem Aktivierungssender ST1 gezielt nur bestimmte fernauslösbare Schaltungssysteme aus einer größeren Menge zu aktivieren ("Warenkorbproblem"). Weiterhin bietet die thermoelektrische Korrelation einen guten Schutz gegen die ungewollte Aktivierung durch hochfrequente Störsignale. Die schematisch in dieser Figur dargestellte Geometrie des Aufbaus wurde der Anschaulichkeit halber gewählt und kann in der Praxis erheblich abweichen. Der gesamte Aufbau kann insbesondere z. B. durch Dünnschichtverfahren auf einem Trägermaterial hergestellt werden, wodurch Anordnung und Geometrie aller Teilkomponenten sich ändern.

Allgemein reicht ein Elektrodenpaar zur Abnahme der Spannung am pyroelektrischen Element 3 aus, auch muss die Länge bei mehreren Elektrodenpaaren a, b, c nicht unterschiedlich sein. Die Elektrodenpaare a, b, c können auch unterschiedlich zusammengeschaltet werden. Auch können mehrere Heizelemente verwendet werden.

Als Verwendung wird insbesondere eine Identifizierung im allgemeinen Sinn bevorzugt, z. B. eine Aktivierung von elektronischen Tickets in Fahrzeugen, Messen, Zugangssystemen, von elektronischen Regalschildern oder Preisschildern (Warenkorb), von Funk-Datenübertragungen an drahtlosen Sensorsystemen, von funkenden Identmarken an Fahrzeugen, Waren, Personen usw., von energieautark arbeitenden Systemen, von Zugangsüberwachungen an Rechnern über Aktivierung einer Chipkarte o.ä. oder von elektronischen Scheckkarten. Die Liste der Anwendungsbeispiele ist nicht vollständig und soll lediglich einen Eindruck von den Möglichkeiten vermitteln.

## Patentansprüche

1. Aktivierungseinrichtung (A), aufweisend,
- eine Empfangsvorrichtung (1) zum Empfang eines Aktivierungssignals (SIGA),
- eine Aktivierungsschaltung (4) zur Aktivierung einer elektrischen Schaltung (5),
**dadurch gekennzeichnet, dass**
- mehrere, mit der Empfangsvorrichtung (1) und der Aktivierungsschaltung (4) verbundene Signalumsetzer (9) unterschiedlicher Kodierung vorhanden sind, die jeweils mindestens einen Heizwiderstand (2) und mindestens ein pyroelektrisches Element (3) umfassen,
- wobei der mindestens eine Heizwiderstand (2) zur Erwärmung des mindestens einen pyroelektrischen Elementes (3) jeweils der Empfangsvorrichtung (1) nachgeschaltet ist; und
- wobei das mindestens eine pyroelektrische Element (3) jeweils mittels des Aktivierungssignals (SIGA) über den mindestens einen Heizwiderstand so erwärmbar ist, dass in diesem eine zur Betätigung der Aktivierungsschaltung (4) ausreichende Spannung erzeugbar ist.

2. Aktivierungseinrichtung (A) nach Anspruch 1, bei der die Kodierung jeweils durch eine Anordnung von Elektroden (a, b, c) an dem mindestens einen pyroelektrischen Element (3) festgelegt ist:

3. Aktivierungseinrichtung (A) nach Anspruch 2, wobei die Aktivierungseinrichtung (A) geeignet ist, eine thermoelektrische Korrelation zwischen dem Aktivierungssignal (SIGA) und der Spannung zwischen mehreren durch das mindestens eine pyroelektrische Element (3) geladenen Elektroden (a,b,c) auszuführen, um einen Korrelationsgewinnen zu erzeugen.

4. Aktivierungsschaltung (A) nach Anspruch 3, bei der die Korrelation durch die Kodierung bestimmt ist.

5. Aktivierungseinrichtung (A) nach einem der Ansprüche 3 oder 4, wobei die Aktivierungseinrichtung (A) geeignet ist, den Korrelationsgewinn durch eine Pulskompression zu erzeugen.

6. Aktivierungsschaltung (A) nach einem der Ansprüche 1 bis 5, wobei die Aktivierungseinrichtung (A) geeignet ist, eine Adressierung der elektrischen Schaltung (5) oder eines Teils der elektrischen Schaltung durch die Kodierung zu bestimmen.

7. Aktivierungseinrichtung (A) nach einem der vorhergehenden Ansprüche, die in Dünnschichttechnologie ausgeführt ist.

8. Fernauslösbares Schaltungssystem (S), umfassend
- eine Aktivierungseinrichtung (A) nach Anspruch 1,
- eine der Aktivierungseinrichtung (A) nachgeschaltete elektrische Schaltung (5), die mittels mindestens eines Energiespeichers (6) betreibbar ist.

9. Fernauslösbares Schaltungssystem (S) nach Anspruch 8, bei dem die elektrische Schaltung (5) mindestens einen Transmitter (7) mit nachgeschalteter Sendevorrichtung (8) umfasst.

10. Fernauslösbares Schaltungssystem (S) nach Anspruch 9, bei dem die Empfangsvorrichtung (1) und die Sendevorrichtung (8) zueinander abweichende Frequenzen nutzen.

11. Verfahren zum Betrieb der Aktivierungseinrichtung (A) nach einem der Ansprüche 1 bis 7, bei dem
a) an die Aktivierungseinrichtung (A) ein zeitlich moduliertes Aktivierungssignal (SIGA) gesendet wird,
b) aufgrund der zeitlichen Modulation des Aktivierungssignals (SIGA) eine thermoelektrische Korrelation durchgeführt wird.

12. Verfahren zum Betrieb eines fernauslösbaren Schaltungssystems (S) nach einem der Ansprüche 8 bis 10, bei dem
a) an das fernauslösbare Schaltungssystem (S) ein zeitlich moduliertes Aktivierungssignal (SIGA) gesendet wird,
b) aufgrund der zeitlichen Modulation in der Aktivierungseinrichtung (A) eine thermoelektrische Korrelation durchgeführt wird,
c) eine von der thermoelektrischen Korrelation abhängige selektive Aktivierung der elektrischen Schaltung (5) durchgeführt wird.

## Claims

1. Activation device (A) comprising
- a receiving device (1) for receiving an activation signal (SIGA),
- an activation circuit (4) for activating an electrical circuit (5),
**characterised in that**
- a plurality of signal converters (9) of different coding are present and are connected to the receiving device (1) and the activation circuit (4), each of said signal converters (9) including at least one heating resistor (2) and at least one pyroelectric element (3),
- with the at least one heating resistor (2) being connected in series downstream of the receiving device (1) in each case for the purpose of heating the at least one pyroelectric element (3), and
- with the at least one pyroelectric element (3) being heatable in each case by means of the activation signal (SIGA) via the at least one heating resistor (2) in such a way that a voltage sufficient for actuating the activation circuit (4) can be generated in said pyroelectric element (3).

2. Activation device (A) according to claim 1, wherein the coding is defined in each case by means of an arrangement of electrodes (a,b,c) on the at least one pyroelectric element (3).

3. Activation device (A) according to claim 2, wherein the activation device (A) is suitable for performing a thermoelectric correlation between the activation signal (SIGA) and the voltage between a plurality of electrodes (a,b,c) charged by means of the at least one pyroelectric element (3) in order to generate a correlation gain.

4. Activation device (A) according to claim 3, wherein the correlation is determined by the coding.

5. Activation device (A) according to one of claims 3 or 4, wherein the activation device (A) is suitable for generating the correlation gain by means of pulse compression.

6. Activation device (A) according to one of claims 1 to 5, wherein the activation device (A) is suitable for determining an addressing of the electrical circuit (5) or a part of the electrical circuit by means of the coding.

7. Activation device (A) according to one of the preceding claims, said activation device (A) being implemented in thin film technology.

8. Remotely triggerable circuit system (S), comprising
- an activation device (A) according to claim 1,
- an electrical circuit (5) connected in series downstream of said activation device (A) and capable of being operated by means of at least one energy store (6).

9. Remotely triggerable circuit system (S) according to claim 8, wherein the electrical circuit (5) includes at least one transmitter (7) with transmitting device (8) connected in series downstream thereof.

10. Remotely triggerable circuit system (S) according to claim 9, wherein the receiving device (1) and the transmitting device (8) use different frequencies from one another.

11. Method for operating the activation device (A) according to one of claims 1 to 7, wherein
a) a time-modulated activation signal (SIGA) is sent to the activation device (A),
b) a thermoelectric correlation is performed on the basis of the time modulation of the activation signal (SIGA).

12. Method for operating a remotely triggerable circuit system (S) according to one of claims 8 to 10, wherein
a) a time-modulated activation signal (SIGA) is sent to the remotely triggerable circuit system (S),
b) a thermoelectric correlation is performed in the activation device (A) on the basis of the time modulation,
c) a selective activation of the electrical circuit (5) is performed as a function of the thermoelectric correlation.

## Revendications

1. Dispositif d'activation (A) présentant
- un dispositif de réception (1) pour la réception d'un signal d'activation (SIGA),
- un circuit d'activation (4) pour l'activation d'un circuit électrique (5)
**caractérisé en ce que**
- plusieurs convertisseurs de signaux (9) de codage différent, raccordés au dispositif de réception (1) et au circuit d'activation (4), sont présents, ceux-ci comprenant respectivement au moins une résistance chauffante (2) et au moins un élément pyroélectrique (3), et
- l'au moins une résistance chauffante (2) étant respectivement installée en aval du dispositif de réception (1) pour l'échauffement de l'au moins un élément pyroélectrique (3), et
- l'au moins un élément pyroélectrique (3) pouvant être respectivement échauffé par l'intermédiaire de l'au moins une résistance chauffante au moyen du signal d'activation (SIGA) de telle manière qu'une tension suffisante pour activer le circuit d'activation puisse être générée dans cet élément pyroélectrique.

2. Dispositif d'activation (A) selon la revendication 1, dans lequel le codage est respectivement déterminé par un dispositif d'électrodes (a, b, c) sur l'au moins un élément pyroélectrique (3).

3. Dispositif d'activation (A) selon la revendication 2, le dispositif d'activation (A) étant apte à exécuter une corrélation thermoélectrique entre le signal d'activation (SIGA) et la tension entre plusieurs électrodes (a, b, c) chargées au moyen de l'au moins un élément pyroélectrique (3) afin de générer un gain de corrélation.

4. Dispositif d'activation (A) selon la revendication 3, dans lequel la corrélation est déterminée par le codage.

5. Dispositif d'activation (A) selon l'une quelconque des revendications 3 ou 4, le dispositif d'activation (A) étant apte à générer le gain de corrélation par une compression d'impulsions.

6. Dispositif d'activation (A) selon l'une quelconque des revendications 1 à 5, le dispositif d'activation (A) étant apte à déterminer un adressage du circuit électrique (5) ou d'une partie du circuit électrique par le codage.

7. Dispositif d'activation (A) selon l'une quelconque des revendications précédentes, qui est exécuté en technologie à couches minces.

8. Système de commutation (S) pouvant être déclenché à distance, comprenant
- un dispositif d'activation (A) selon la revendication 1,
- un circuit électrique (5) installé en aval du circuit d'activation (A), ce circuit électrique pouvant être opéré au moyen d'au moins un accumulateur d'énergie (6).

9. Système de commutation (S) pouvant être déclenché à distance, selon la revendication 8, dans lequel le circuit électrique (5) comprend au moins un transmetteur (7) doté d'un dispositif d'émission (8) installé en aval.

10. Système de commutation (S) pouvant être déclenché à distance, selon la revendication 9, dans lequel le dispositif de réception (1) et le dispositif d'émission (8) utilisent des fréquences variant les unes par rapport aux autres.

11. Procédé pour le fonctionnement du dispositif d'activation (A) selon l'une quelconque des revendications 1 à 7, dans lequel
a) un signal d'activation (SIGA) modulé temporellement est émis au dispositif d'activation (A),
b) une corrélation thermoélectrique est réalisée en raison de la modulation temporelle du signal d'activation (SIGA).

12. Procédé pour le fonctionnement d'un système de commutation (S) pouvant être déclenché à distance, selon l'une quelconque des revendications 8 à 10, dans lequel
a) un signal d'activation (SIGA) modulé temporellement est émis au système de commutation (S) pouvant être déclenché à distance,
b) une corrélation thermoélectrique est réalisée en raison de la modulation temporelle dans le dispositif d'activation (A),
c) une activation sélective du circuit électrique (5), dépendant de la corrélation thermoélectrique, est réalisée.
